# EUROPEAN PATENT APPLICATION

(11) **EP 1 427 129 A2**
(43) Date of publication of application: **09.06.2004**
(21) Application number: 03257612.6
(22) Date of filing: 03.12.2003
(51) Int. Cl.: H04L 1/20, H04L 1/00

(54) **Frame error detection**

(30) Priority: 03.12.2002 GB 0228133
(71) Applicant: Matsushita Electric Industrial Co., Ltd., Kadoma-shi, Osaka-fu 571-8501 (JP)
(72) Inventor: Canpolat, Bahadir, Thatcham, Berkshire RG19 4YF (GB)
(74) Representative: Dawson, Elizabeth Ann

(57) **Abstract**

A method of identifying a bad frame in a digital data decoder comprising implementation, in combination with parity checks, of a plurality of operations upon a set of values obtained from measurements of received frames, setting predetermined pass conditions for each operation and indicating a bad frame if at least one of said operations results in a pass condition.

## Description

This invention relates to digital data transmissions and in particular it relates to frame error detection in digital data decoders.

The following description is based on the GSM cellular communications system to which the invention may be applied successfully. The invention may also be applied usefully to other systems of digital data transmission.

Owing to the corruption of the transmitted data along the physical channel between transmitter and receiver coding schemes are used such that corrupted frames can be detected. Detection of corrupted frames allows for implementation of error concealment techniques well known in the art. In order to maintain the quality of the output from the receiver it is important to discriminate accurately and consistently good frames from bad frames.

Some current coding schemes cannot provide for discrimination between good and bad frames sufficiently to conform to the system requirements and their performance needs to be augmented. This is the case with the cyclic redundancy checks (CRC) of the GSM system.

Some prior art arrangements are presented in US 5 960 010 and US 6 092 230 and provide background information for the present invention. US 5 960 010 Augments a parity check with information derived from a convolutional decoder and seeks to reclaim uncorrupted parameters from bad frames and discard corrupted parameters from frames declared good. US 6 092 230 follows a parity (CRC) check with a check of measured bit error rate against a threshold. The threshold is switched between two levels depending on the number of successive good or bad frames that have been declared. A run of bad frames causes a switch to a lower threshold and vice versa.

The GSM system operates different codecs over a range of propagation channel types. The full rate speech codec encodes 160, 8KHz samples into 260 bits containing 76 parameters. These 260 bits are divided into two groups depending upon their importance to speech quality. The 78 least important bits (class II bits) are unprotected because of their minor effect on speech quality. The most important 132 bits (class I bits) are protected by a half rate convolutional code. The class I bits are further subdivided into classes Ia and Ib with the most significant bits (Ia) protected by a 3 bit cyclic redundancy check (CRC).

The Half Rate speech codec encodes sixteen, 8 kHz samples into 112 bits containing 18 parameters. These 112 bits are divided into two groups and the 17 bits least important to speech quality (class II) are unprotected. The most important 95 bits (class I) are protected by an additional convolutional coding. The class I bits are further subdivided into classes Ia and Ib, with the most significant 22 bits (Ia) protected by a 3 bit cyclic redundancy check (CRC). All of the class I bits and class Ia CRC check bits are protected by a 1/3 rate convolutional code of constraint length K=7, which is punctured to reduce the number of transmitted encoded bits by one third before transmission.

Maintenance of speech quality depends upon accurate detection of frames with any class Ia errors and frames with more than a certain number of class Ib errors, for all propagation channel types. Error frames are marked as bad frames for the Full Rate and Enhanced Full Rate speech codecs. For the Half Rate speech codec an additional frame classification is made in respect of unreliable frames.

When a received speech frame is marked as bad the speech codec erases the frame and a concealment algorithm acts to reduce the effects of the bad frame from the user. A received speech frame marked as unreliable is further validated by the speech codec. If the validation check fails then the speech codec erases the speech frame and if the validation check passes then the speech frame is classified as good and is used by the codec.

It is an object of the invention to provide a method for detecting frame errors accurately and consistently using the results of a set of standard measurements in a receiver.

The present invention provides a method of identifying a faulty frame in a digital data decoder in which a faulty frame indication is triggered by at lease one of failure of a parity check, a dummy burst detection or a bad frame indication, characterised in that a faulty frame indication is additionally triggered when one of a plurality of further conditions is met, the further conditions comprising logical operations performed on a set of values obtained from measurements obtained from received frames. The expression "faulty" refers either to a bad frame or to an unreliable frame. A check for an unreliable frame is usually carried out in addition to a check for a bad frame. Thus, a bad frame indication (BFI) will automatically lead to an unreliable frame indication (UFI). The BFI may be simply triggered by a CRC check, any other prior art method or by a first process using an embodiment of the invention.

If the faulty frame is a BFI, the initial trigger will usually be a parity check failure or a dummy burst detection, whereas if the faulty frame indication of the invention is a UFI, the initial trigger will be a BFI.

Preferred features of the invention are described in the attached subsidiary claims.

The method according to the invention is described below with reference to the figures in which:
Figure 1 is a modal diagram illustrating the application of the invention to a TCH/FS channel,
Figure 2 shows the logical AND operation for fulfilment of condition 2 of figure 1
Figure 3 shows the logical AND operation for fulfilment of condition 3 of figure 1
Figure 4 is a modal diagram illustrating the application of the invention to a TCH/EFS channel,
Figure 5 shows the logical OR operation for fulfilment of condition X and the logical AND operation for fulfilment of condition Y of figure 4
Figure 6 is a modal diagram illustrating the application of the invention to a TCH/HS channel,
Figure 7 shows the logical AND operations for fulfilment of conditions 2 and 3 of figure 6,
Figure 8 is a modal diagram showing the application of the method in detecting unreliable frames.

In the prior art a bad frame is declared if the 3 bit CRC parity fails. The method of the present invention uses parity checks in combination with readily available measurement results to improve discrimination of good from bad frames. A 3 bit CRC parity failure or detection of a dummy burst will cause an indication of a bad frame. Similarly stealing of a frame for FACCH will cause an indication of a bad frame.

In addition a plurality of operations upon a set of values is implemented. The set of values is obtained by measurements of received frames and is normally available within the receiver. Conditions are attached to each of the plurality of operations such that fulfilment of any of the conditions results in classification of a frame as a bad frame.

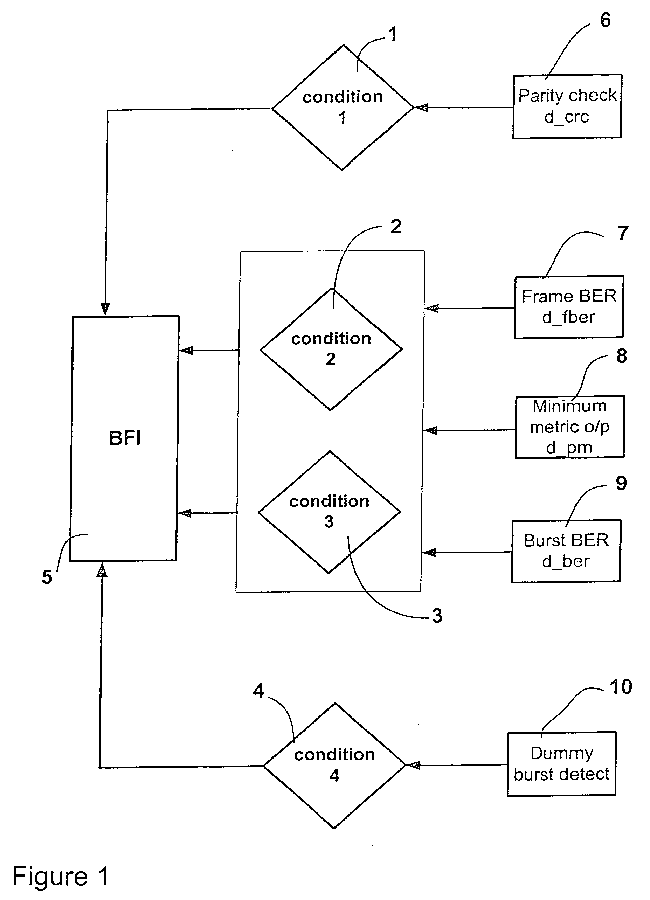

The modal diagram of figure 1 provides an illustration of the method of the invention in relation to the full rate (TCH/FS) GSM channel. The bad frame indication (BFI) shown at **5** is triggered if any of the conditions imposed in conditional stages **1** through to **4** are fulfilled. The data inputs for the conditional stages **1** to **4** are represented by the boxes **6** through to **10**. The data at boxes 6 to 10 are standard outputs produced in other receiver functions.

In block **6** the result of the parity check (d_crc) for the most important speech bits (class Ia) is provided. At block **7** is the BER estimate over the frame (d_fber). This variable provides the estimate of the number of bit errors over the coded parts (class Ia and Ib bits) of the speech frame.
The minimum accumulated metric output (d_pm) from the convolutional decoder is provided at block **8**.

In block **9** are the BER estimates per burst (d_ber[i], i=0..7 ) This array contains the burst based BER estimation results for the 8 bursts that form the speech frame. The dummy burst detection outputs (d_dummy[i], i=0..7) are arrayed at block **10** and this array contains the results of a dummy burst detection algorithm for the 8 bursts that form the speech frame.

The BFI value is set to "1" and a bad frame indicated, if at least one of the conditions 1 to 4 is fulfilled. The first condition, shown as condition **1** in figure 1, is that a parity check has indicated an error at block **6 ,** such that (d_crc=1).

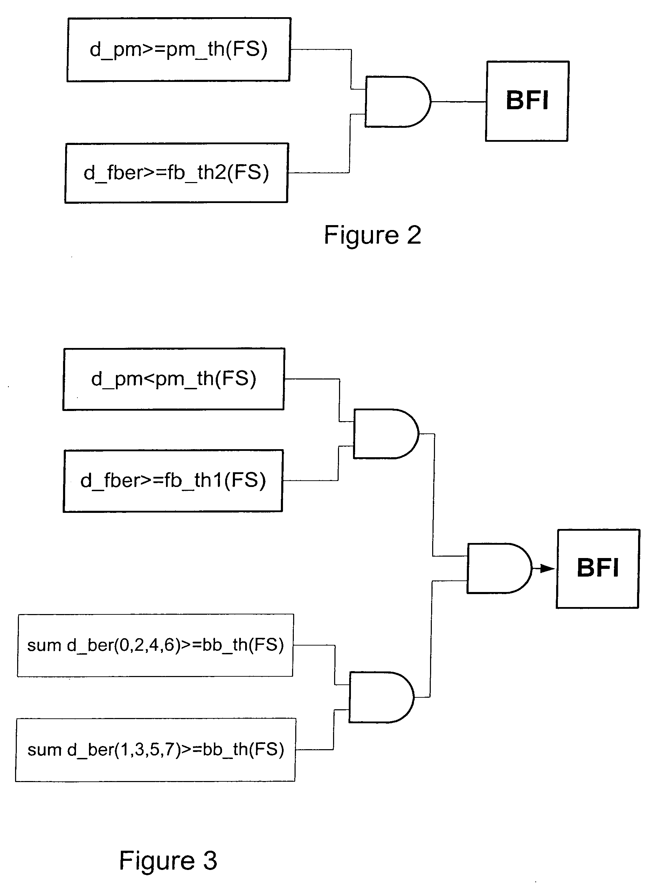

Condition 2 relies upon the inputs available from blocks **7** and **8,** the frame BER and the minimum metric output from the convolutional decoder respectively. The requirements for meeting condition 2 are set out in figure 2 and may be stated as
d_pm>=pm_th(FS) AND d_fber>=fb_th2(FS),
where:
pm_th(FS) is a threshold value against which the minimum metric output of block **8** is compared. This threshold is a predetermined value and applies to the GSM full rate codec
and
fb_th2(FS) is a predetermined threshold value against which the frame BER estimate of block **7** is compared for condition 2, GSM full rate codec.

Operation of condition 3 relies upon the data available from blocks **7, 8** and **9** of figure 1, namely the frame BER, the minimum metric output from the convolutional decoder and the burst BER estimate array respectively. The requirements for meeting condition 3 are set out in figure 3 and may be stated as:
d_pm<pm_th(FS) AND d_fber>=fb_th1(FS) AND sum of d_ber(0, 2, 4 and 6)>=bb_th(FS) AND sum of d_ber(1,3,5,7) >=bb_th(FS)
where fb_th1(FS) is a predetermined threshold value against which the frame BER estimate of block **7** is compared for condition 3, GSM full rate codec.
bb_th(FS) is a predetermined threshold value against which the sum of the BER estimates for four selected bursts is compared.
d_pm<pm_th(FS) is the same as described for condition 2 above.

The operation of condition 4 depends upon the "dummy burst detection outputs" array available at block 10. When at least one of the bursts that make up the speech frame is detected as a dummy, i.e. there is at least one index, i=0..7, for which, d_dummy[i]>=db_th, then condition 4 is met and the BFI value set to 1. db_th is a predetermined threshold value for a dummy burst.

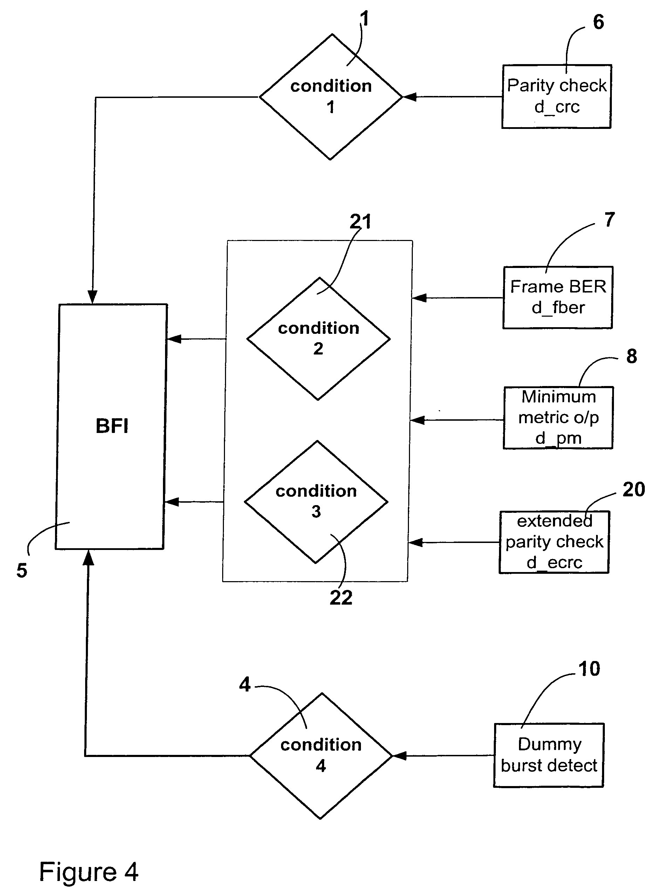

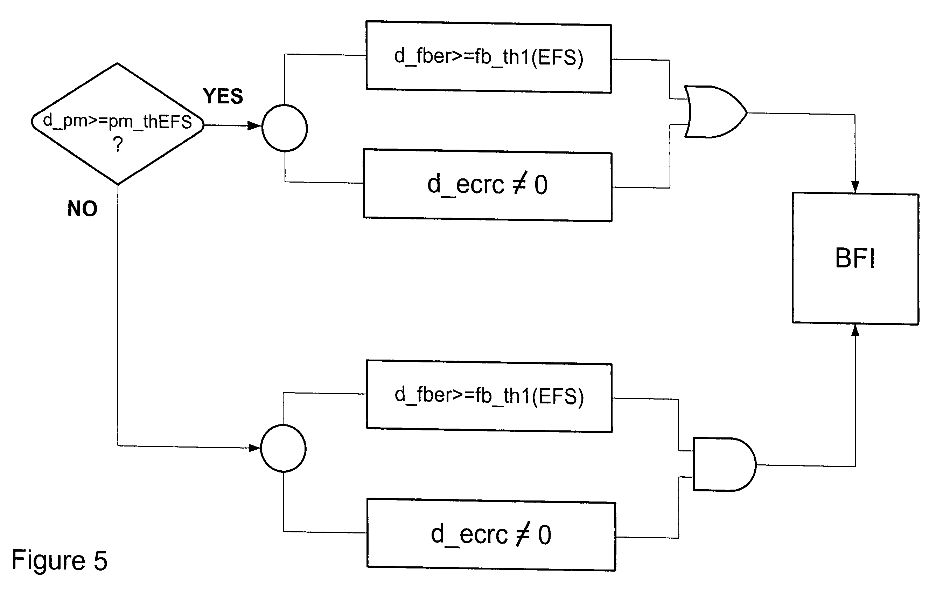

An application of the method for the (TCH/EFS) channel is presented in the modal diagram of figure 4 and the flow diagram of figure 5. The data inputs and conditional stages for setting the bad frame indication in respect of enhanced full rate codec are shown in figure 4. Where there are no changes in figure 4 compared with figure 1, the blocks and conditional stages carry the same designations. The operation of the bad frame indication for the enhanced full rate traffic channel is similar to that for the full rate traffic channel described previously. If at least one of the conditions 1 to 4 is fulfilled then BFI=1 and a bad frame is indicated.

The conditions 1 and 4 and data blocks **6,7 ,8** and **10** remain the same as for the previously described full rate channel of figure 1. The burst BER estimate array of block **10** in figure 1 has been replaced in figure 4 by the result of an extended parity check (d_ecrc) identified as block 20. The preferred d_ecrc result was not available for the figure 1 example. Conditional stages **2** and **3** of figure 1 have been replaced by conditional stages **21** and **22** respectively in figure 4.

Condition **2** at stage **21** and condition **3** at stage **22** of figure 4 rely upon the data available at blocks **7, 8** and **20**, namely the frame BER estimate (d_fber), the minimum metric output (d_pm) and the result of the extended parity check (d_ecrc). The condition applied at stage 21 as condition 2 is set out in figure 5 and may be stated as
If d_pm>=pm_th(EFS), then if d_fber>=fb_th1(EFS) OR d_ecrc≠0,

The condition applied at stage 22 as condition 3 is also set out in figure 5 and may be stated as
If d_pm<pm_th(EFS), then if d_fber>=fb_th1(EFS) AND d_ecrc≠0. Where
pm_th(EFS) is a predetermined threshold value against which the minimum output metric of the convolutional decoder is compared for the TCH/EFS channel and
fb_th1(EFS) is a predetermined threshold value against which the frame BER estimate of block is compared for condition 3, GSM enhanced full rate codec.

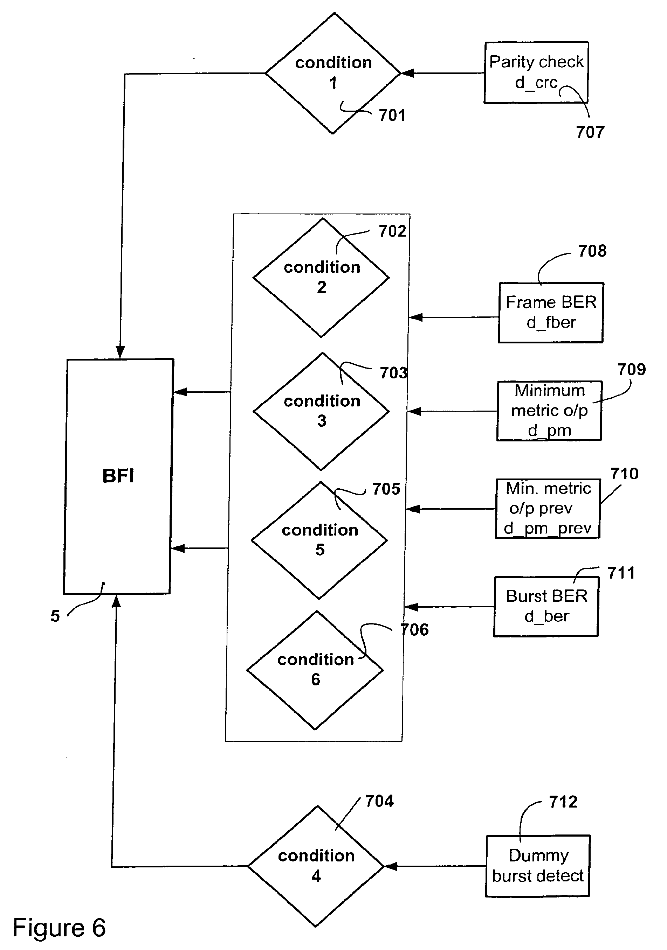

With reference to the modal diagram of figure 6, the conditions for bad frame indication for the GSM half rate codec will be described. In this arrangement there are six conditional stages **701** to **706** and six data blocks **707** to **712**.

Condition 1 at stage **701** is fulfilled if a parity check error is indicated at block **707** (d_crc=1). The data for the conditional stage **702**, condition 2, is available from blocks **708** and **709**; the BER estimate over the frame (d_fber) and the minimum accumulated metric output from the convolutional decoder (d_pm) respectively. Condition 2 is fulfilled if d_pm>=pm_th1(HS) AND d_fber>=fb_th1(HS),
where
pm_th1(HS) is a threshold value against which the minimum metric output (block 709) is compared. This threshold is a predetermined value and applies to the GSM half rate codec
fb_th1(HS) is a predetermined threshold value against which the frame BER estimate is compared for condition 2, GSM half rate codec.
condition 3 is fulfilled if d_pm>=pm_th1(HS) **AND** d_fber>=fb_th1(HS) AND sum of d_ber(0, 2)>=bb_th(HS) **AND** sum of d_ber(1,3) >=bb_th(HS),
where bb_th(HS) is a threshold value against which the sum of BER for two bursts is compared. Condition 4 is fulfilled when at least one of the bursts that make up the speech frame is detected to be dummy, i.e. there is at least one index, i=0..3, for which, d_dummy[i]>=db_th,
Condition 5 is fulfilled when d_pm>=pm_th2(HS),
where pm_th2(HS) is the threshold against which is compared the minimum accumulated metric output (d_pm_prev) from the convolutional decoder derived from the speech frame one frame in advance of the current frame, i.e. the previous frame,
condition 6 is fulfilled when d_pm+d_pm_prev>=pmtot_th
where pmtot_th is a predetermined threshold value.

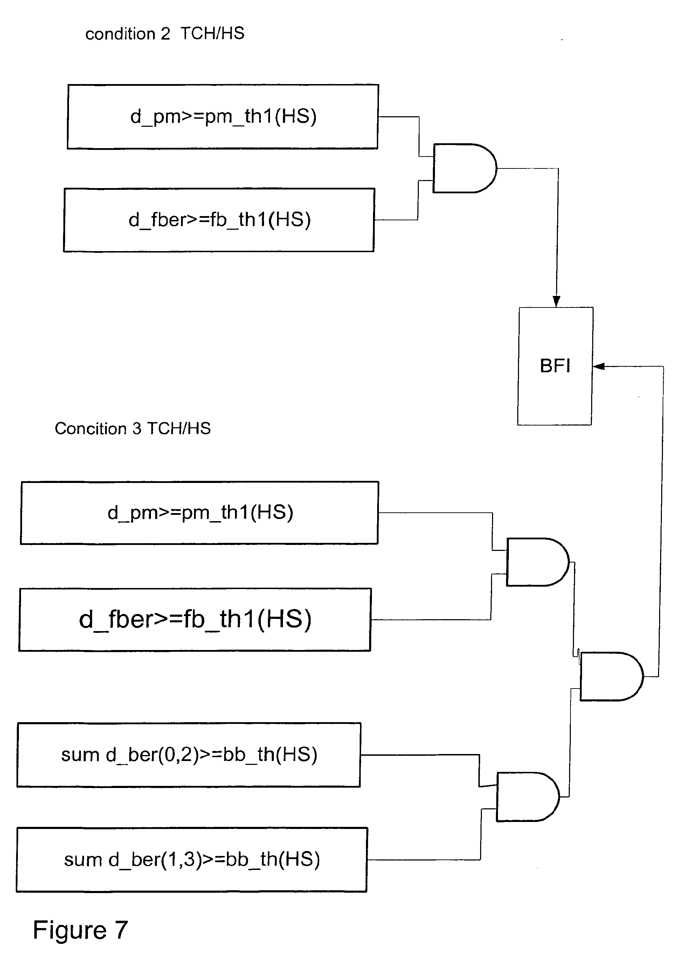

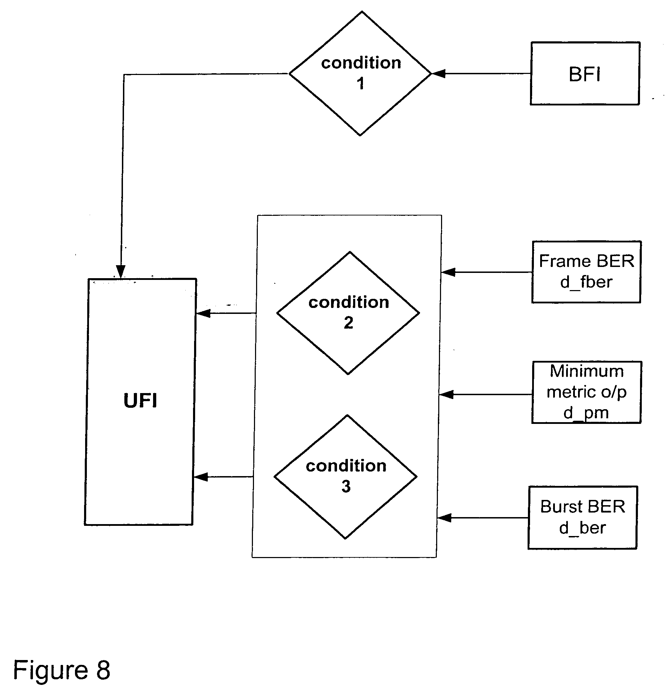

An additional requirement for the TCH/HS it is to identify unreliable frames. The method for detection of unreliable frames according to the invention is illustrated in figure 8. An unreliable frame is indicated at **807** if at least one of the conditions 1 to 3 is fulfilled. The first condition at conditional stage **801** is that a bad frame has been indicated (BFI=1). A bad frame may be indicated by any prior art method or any of the methods discussed above with reference to figures 1 to 7.
The second condition at conditional stage **802** is fulfilled if d_pm>=pm_th3(HS) **AND** d_fber>=fb_th1(HS),
and the third condition at conditional stage **803** is fulfilled if d_pm>=pm_th3(HS) **AND** d_fber>=fb_th1(HS) **AND**
sum of d_ber(0, 2)>=bb_th(HS) **AND** sum of d_ber(1,3)>=bb_th(HS),
where pm_th3(HS), fb_th1(HS), bb_th(HS) are predetermined threshold values.

The threshold values employed in the examples given are determined by an exhaustive search for each parameter that provides the best overall frame error rate and residual bit error rate margin. The requirement for the number of frames declared good from a random input to be within limit (<.03%) must also be taken into account when setting thresholds.

### Glossary

- BER: Bit Error Rate
- BFI: Bad Frame Indication
- CRC: Cyclic Redundancy Check
- FACCH: Fast Associated Control Channel
- GSM: Global System for Mobile communications
- UFI: Unreliable Frame Indication
- ≠: not equal to
- >=: equal to or greater than
- <: less than

## Claims

1. A method of identifying a faulty frame in a digital data decoder in which a faulty frame indicator is triggered by failure of a parity check, **characterised in that** a faulty frame indication is additionally triggered when one of a plurality of further conditions is met, the further conditions comprising logical operations performed on a set of values obtained from measurements obtained from received frames.

2. A method as claimed in claim 1 in which the logical operations include Boolean operations.

3. A method as claimed in claim 1 or 2 in which the set of values includes the estimated bit error rate over the frame (d_fber).

4. A method as claimed in claim 1, 2 or 3 in which the set of values includes the minimum accumulated metric output (d_pm) from a convolutional decoder.

5. A method as claimed in claims 3 and 4 in which at least one of said logical operations uses at least the estimated frame bit error rate (d_fber) and the minimum accumulated metric output (d_pm).

6. A method as claimed in claim 5 in which at least one other of said logical operations uses estimated frame bit error rate (d_fber), minimum accumulated metric output (d_pm) and another value obtained from measurements obtained from received frames.

7. A method as claimed in any preceding claim in which the set of values includes the estimated bit error rate per burst (d_ber).

8. A method as claimed in any preceding claim in which the set of values includes the minimum accumulated metric output from a convolutional decoder one frame in advance of the current frame (d_pm_prev).

9. A method as claimed in any of claims 1 to 7 in which the set of values includes an extended parity check (d_ecrc).

10. A method as in any preceding claim in which the plurality of operations includes at least one logical **AND** operation for the results arising from comparisons with different thresholds.

11. A method as in any preceding claim in which the plurality of operations includes at least one logical **OR** operation for the results arising from comparisons with different thresholds.

12. A method as claimed in claim 1 in which the operations are d_pm>=pm_th(FS) **AND** d_fber>=fb_th2(FS),
and
d_pm<pm_th(FS) **AND** d_fber>=fb_th1(FS) **AND** sum of d_ber(0,2,4 and 6)>=bb_th(FS) **AND** sum of d_ber(1,3,5,7)>=bb_th(FS)

13. A method as claimed in claim 1 in which the operations are if d_pm>=pm_th(EFS), then if d_fber>=fb_th1(EFS) **OR** d_ecrc≠0,
and
If d_pm<pm_th(EFS), then if d_fber>=fb_th1(EFS) **AND** d_ecrc≠0.

14. A method as claimed in claim 1 in which the operations are d_pm>=pm_th1(HS) **AND** d_fber>=fb_th1(HS),
and
d_pm>=pm_th1(HS) **AND** d_fber>=fb_th1(HS) AND sum of d_ber(0, 2)>=bb_th(HS) **AND** sum of d_ber(1,3) >=bb_th(HS),
and
d_pm>=pm_th2(HS),
and
d_pm+d_pm_prev>=pmtot_th

15. A method as claimed in claim 1 in which the operations are d_pm>=pm_th3(HS) **AND** d_fber>=fb_th1(HS),
and
d_pm>=pm_th3(HS) **AND** d_fber>=fb_th1(HS) AND
sum of d_ber(0, 2)>=bb_th(HS) **AND** sum of d_ber(1,3)>=bb_th(HS),

16. Use of a method as claimed in any of claims 1 to 14 to identify a bad frame in a full rate speech codec.

17. Use of a method as claimed in any of claims 1 to 7, 9 and 15 to identify an unreliable frame in a half rate speech codec.
